# EUROPEAN PATENT APPLICATION

(11) **EP 4 579 780 A1**
(43) Date of publication of application: **02.07.2025**
(21) Application number: 23919324.6
(22) Date of filing: 19.09.2023
(51) Int. Cl.: H01M 4/13, H01M 4/62, H01M 50/597, H01M 10/0525, H01M 10/054

(54) **NEGATIVE ELECTRODE SHEET, ELECTRODE ASSEMBLY, BATTERY, AND ELECTRICAL DEVICE**

(30) Priority: 02.02.2023 CN 202310091387
(71) Applicant: Contemporary Amperex Technology (Hong Kong) Limited, Central (HK)
(72) Inventor: LI, Xiao, Ningde, Fujian 352100 (CN); XU, Xiaofu, Ningde, Fujian 352100 (CN); LI, Ying, Ningde, Fujian 352100 (CN)
(74) Representative: Gong, Jinping
(86) International application number: PCT/CN2023/119801
(87) International publication number: WO 2024/159760

(57) **Abstract**

This application discloses a negative electrode plate, an electrode assembly, a battery, and an electric apparatus. A coating is provided at an edge of the negative electrode plate, and the coating includes a functional compound, the functional compound being able to react with sodium metal or lithium metal to produce gas.

## Description

### TECHNICAL FIELD

This application pertains to the field of secondary batteries and specifically relates to a negative electrode plate, an electrode assembly, a battery, and an electric apparatus.

### BACKGROUND

Secondary batteries have been widely used in various consumer electronic products and electric vehicles due to their prominent advantages such as light weight, no pollution, and no memory effect. During cycling of a battery, metal ions deposit on a surface of a negative electrode plate to generate dendrites. In a later stage of cycling, the generated dendrites have the risk of piercing a separator and causing a short circuit in the battery, thus bringing safety hazards.

### SUMMARY

In view of the technical problems existing in the background, this application provides a negative electrode plate, aiming to avoid the risk that dendrites generated on a negative electrode plate in a later stage of cycling of an existing battery pierce a separator and cause a short circuit in the battery.

To achieve the above objective, according to a first aspect, this application provides a negative electrode plate, where a coating is provided at an edge of the negative electrode plate, and the coating includes a functional compound, the functional compound being able to react with sodium metal or lithium metal to produce gas.

Compared with the prior art, this application includes at least the following beneficial effects: The coating is provided at the edge of the negative electrode plate, where the coating includes the functional compound that can react with sodium metal or lithium metal to produce gas. In a later stage of cycling of a battery, a trend of dendrites growing and extending parallel to a surface of the negative electrode plate is greater than a trend of dendrites growing along a thickness direction, that is a tip, of the negative electrode plate. When the dendrites growing parallel to the surface of the negative electrode plate extend to the coating, the dendrites come into contact with the coating and react with the functional compound in the coating to produce gas so as to open an explosion-proof valve, thus avoiding the risk of the dendrites piercing the separator and causing a short circuit in the battery.

In any embodiment of this application, the functional compound includes at least one of an alcohol compound, a carboxylic acid compound, a phenol compound, an amine compound, a thiol compound, a benzophenone compound, and a cycloolefin compound. Therefore, in the later stage of cycling of the battery, when the dendrites growing parallel to the surface of the negative electrode plate extend to the coating, the dendrites come into contact and react with the functional compound in the coating to produce gas so as to burst the explosion-proof valve, thus avoiding the risk of the dendrites piercing the separator and causing a short circuit in the battery.

In any embodiment of this application, the number of carbon atoms on a main chain of the functional compound is not less than 4, preferably 4-12.

In any embodiment of this application, a mass percentage of the functional compound in the coating is 70%-90%. Therefore, in the later stage of cycling of the battery, when the dendrites growing parallel to the surface of the negative electrode plate extend to the coating, the dendrites come into contact and react with the functional compound in the coating to produce gas so as to burst the explosion-proof valve, thus avoiding the risk of the dendrites piercing the separator and causing a short circuit in the battery.

In any embodiment of this application, a thickness of the coating is 5 µm-60 µm. Therefore, in the later stage of cycling of the battery, when the dendrites growing parallel to the surface of the negative electrode plate extend to the coating, the dendrites come into contact and react with the functional compound in the coating to produce gas so as to burst the explosion-proof valve, thus avoiding the risk of the dendrites piercing the separator and causing a short circuit in the battery.

In any embodiment of this application, a width of the coating is not less than 3 mm, preferably 3 mm-6 mm. Therefore, in the later stage of cycling of the battery, when the dendrites growing parallel to the surface of the negative electrode plate extend to the coating, the dendrites come into contact and react with the functional compound in the coating to produce gas so as to burst the explosion-proof valve, thus avoiding the risk of the dendrites piercing the separator and causing a short circuit in the battery.

In any embodiment of this application, the coating extends along a periphery of the negative electrode plate to form a ring shape. Therefore, in the later stage of cycling of the battery, when the dendrites growing parallel to the surface of the negative electrode plate extend to the coating, the dendrites come into contact and react with the functional compound in the coating to produce gas so as to burst the explosion-proof valve, thus avoiding the risk of the dendrites piercing the separator and causing a short circuit in the battery.

In any embodiment of this application, the coating is provided on two opposite sides in a width direction of the negative electrode plate.

In any embodiment of this application, the negative electrode plate includes a negative electrode current collector, and the coating is provided at an edge of the negative electrode current collector.

In any embodiment of this application, the negative electrode plate includes the negative electrode current collector and a negative electrode active material layer, the negative electrode active material layer is provided on at least one side of the negative electrode current collector, and the coating is provided at an edge of the negative electrode active material layer.

According to a second aspect, this application provides an electrode assembly including a positive electrode plate, a negative electrode plate, and a separator, where the separator is provided between the positive electrode plate and the negative electrode plate, and the negative electrode plate includes the negative electrode plate according to the first aspect of this application. Therefore, during charge and discharge cycles, the electrode assembly has high safety performance.

In any embodiment of this application, an orthographic projection of the coating of the negative electrode plate on the positive electrode plate is located on an outer side of the positive electrode plate.

In any embodiment of this application, a ceramic coating is provided at an end of the positive electrode plate in a length direction. Therefore, on one hand, the ceramic coating can achieve insulation, preventing burrs formed during a cutting process of the positive electrode plate from piercing the separator and forming a micro-short circuit. On the other hand, the ceramic coating can prevent the dendrites generated on the negative electrode plate from coming into contact with the positive electrode plate across the edge of the negative electrode plate and forming a micro-short circuit.

According to a third aspect, this application provides a battery including the electrode assembly according to the second aspect of this application. Therefore, the battery has high safety performance.

According to a fourth aspect, this application provides an electric apparatus including the battery according to the third aspect of this application, where the battery is configured to supply electrical energy.

Additional aspects and advantages of this application will be given in part in the following description, part of which will become apparent from the following description or be learned from the practice of the embodiments of this application.

### BRIEF DESCRIPTION OF DRAWINGS

To describe the technical solutions in this application more clearly, the following briefly describes the accompanying drawings used in this application. Apparently, the accompanying drawings in the following description show only some embodiments of this application, and persons of ordinary skill in the art may still derive other drawings from these accompanying drawings without creative efforts.
FIG. 1 is a schematic structural diagram of a negative electrode plate according to an embodiment of this application;
FIG. 2 is a schematic structural diagram of a negative electrode plate according to another embodiment of this application;
FIG. 3 is a schematic structural diagram of a negative electrode plate according to still another embodiment of this application;
FIG. 4 is a schematic structural diagram of a negative electrode plate according to yet another embodiment of this application;
FIG. 5 is a schematic structural diagram of a negative electrode plate according to still yet another embodiment of this application;
FIG. 6 is a schematic structural diagram of an electrode assembly according to an embodiment of this application;
FIG. 7 is a schematic structural diagram of a positive electrode plate according to an embodiment of this application;
FIG. 8 is a schematic structural diagram of a battery according to an embodiment of this application;
FIG. 9 is a schematic structural diagram of a battery module according to an embodiment of this application;
FIG. 10 is a schematic structural diagram of a battery pack according to an embodiment of this application;
FIG. 11 is an exploded view of FIG. 10; and
FIG. 12 is a schematic diagram of an electric apparatus using a battery as a power source according to an embodiment.

Reference signs are described as follows:
1000: electrode assembly; 100: negative electrode plate; 11: coating; 12: negative electrode current collector; 13: negative electrode active material layer; 200: positive electrode plate; 21: ceramic coating; 300: separator;
1: secondary battery; 2: battery module; 3: battery pack; 4: upper box body; and 5: lower box body.

### DESCRIPTION OF EMBODIMENTS

The following further describes this application with reference to specific embodiments. It should be understood that these specific embodiments are merely intended to illustrate this application but not to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of this specification, unless otherwise specified, the term "or (or)" is inclusive. That is, the phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present).

In the descriptions of this specification, it should be noted that "more than" and "less than" are inclusive of the present number and that "more" in "one or more" means two or more than two, unless otherwise specified.

Unless otherwise specified, the terms used in this application have well-known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

In recent years, new energy vehicles have developed by leaps and bounds, and in the field of electric vehicles, batteries play an irreplaceable and crucial role as power sources for the electric vehicles. As core components of new energy vehicles, batteries have high requirements in terms of both safety and cycle life.

In an early stage of cycling of a battery, dendrites are concentrated in a large-area surface ranging of a negative electrode plate. In a later stage of cycling, the dendrites generated on the large-area surface of the negative electrode plate have the risk of piercing a separator and causing a short circuit in the battery, thus bringing safety hazards.

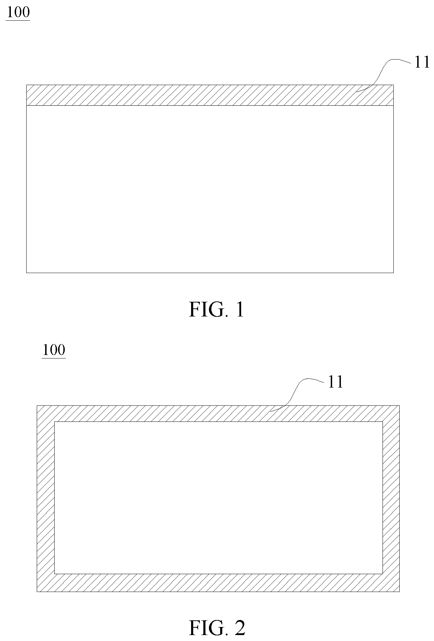

On the basis of the above considerations, to reduce the risk that the dendrites generated on the negative electrode plate in the later stage of cycling of the battery pierce the separator and cause a short circuit, according to a first aspect, this application provides a negative electrode plate. For example, referring to FIG. 1, a coating 11 is provided at an edge of a negative electrode plate 100, and the coating 11 includes a functional compound, the functional compound being able to react with sodium metal or lithium metal to produce gas.

It should be noted that in this application, "an edge of a negative electrode plate 100" refers to a region of the negative electrode plate 100 that is not covered by a positive electrode plate after the negative electrode plate 100, the separator, and the positive electrode plate are stacked to form an electrode assembly, that is, a region where a length and/or width direction of the negative electrode plate 100 exceeds the positive electrode plate.

In the early stage of cycling of the battery, when uneven deposition occurs on the negative electrode plate, dendrites are generated on a large surface of the negative electrode plate. As the cycling of the battery progresses, in the later stage of cycling, the dendrites pierce the separator as the dendrites grow along a tip, leading to a short circuit in the battery. Since the anisotropy of growth of the dendrites is greater than the isotropy, in the later stage of cycling, the dendrites also grow parallel to a surface of the negative electrode plate. Moreover, a trend of dendrites growing parallel to the surface of the negative electrode plate is greater than the trend of dendrites growing along the tip. In this application, the coating 11 is provided at the edge of the negative electrode plate 100, where the coating 11 includes the functional compound that can react with sodium metal or lithium metal to produce gas. In the later stage of cycling of the battery, since the trend of dendrites growing parallel to the surface of the negative electrode plate 100 is greater than the trend of dendrites growing along the tip, before the tips of the dendrites pierce the separator and cause a short circuit in the battery, when the dendrites that are formed on the surface of the negative electrode plate 100 and grow parallel to the surface of the negative electrode plate 100 extend to the coating 11 of the negative electrode plate 100, the dendrites come into contact and react with the functional compound in the coating 11 to produce gas so as to open an explosion-proof valve, thus avoiding the risk of the dendrites piercing the separator and causing a short circuit in the battery.

In some embodiments, the functional compound in the coating 11 includes at least one of an alcohol compound, a carboxylic acid compound, a phenol compound, an amine compound, a thiol compound, a benzophenone compound, and a cycloolefin compound. Specifically, hydroxyl groups in the alcohol compound, the carboxylic acid compound, and the phenol compound react with dendrites such as sodium dendrites or lithium dendrites to produce hydrogen gas; amino groups in the amine compound react with dendrites such as sodium dendrites or lithium dendrites to produce ammonia gas; thiol groups in the thiol compound react with dendrites such as sodium dendrites or lithium dendrites to produce hydrogen gas; the benzophenone compound reacts with dendrites such as sodium dendrites or lithium dendrites to produce hydrogen gas; and the cycloolefin compound reacts with dendrites such as sodium dendrites or lithium dendrites to produce hydrogen gas. Therefore, in the later stage of cycling of the battery, when the dendrites growing parallel to the surface of the negative electrode plate 100 extend to the coating 11, the dendrites come into contact and react with the functional compound in the coating 11 to produce gas to burst the explosion-proof valve, thus avoiding the risk of the dendrites piercing the separator and causing a short circuit in the battery.

In some embodiments, the number of carbon atoms on a main chain of the functional compound in the coating 11 is not less than 4, for example, 4-15, 5-14, 6-13, 7-12, 8-11, or 9-10. In some other embodiments, the number of carbon atoms on the main chain of the functional compound is 4-12.

As an example, the alcohol compound includes but is not limited to n-butanol, 2-butanol, n-pentanol, isopentanol, 2-pentanol, n-hexanol, 2-hexanol, n-heptanol, 2-heptanol, decanol, butanediol, and the like; the carboxylic acid compound includes but is not limited to butyric acid, valeric acid, caproic acid, and heptanoic acid; the amine compound includes but is not limited to butylamine, pentylamine, hexylamine, and heptylamine; the thiol compound includes but is not limited to n-butanethiol, 1-pentanethiol, n-hexanethiol, and 1-heptanthiol; the phenol compound includes but is not limited to phenol, cresol, and hydroquinone; the benzophenone compound includes but is not limited to benzophenone, and acetophenone; and the cycloolefin compound includes but is not limited to cyclopentadiene, and cyclobutadiene.

In some embodiments, a mass percentage of the functional compound in the coating 11 is 70%-90%, for example, 72%-90%, 72%-88%, 74%-86%, 75%-85%, 78%-82%, or 78%-80%. Therefore, in the later stage of cycling of the battery, when the dendrites growing parallel to the surface of the negative electrode plate 100 extend to the coating 11, the dendrites come into contact and react with the functional compound in the coating 11 to produce enough gas so as to burst the explosion-proof valve, thus avoiding the risk of the dendrites piercing the separator and causing a short circuit in the battery.

Further, the coating 11 further includes a binder. That is, a slurry including the functional compound and the binder is applied to the edge of the negative electrode plate 100, followed by drying and curing to form the coating 11 including the functional compound at the edge of the negative electrode plate 100.

As an example, the binder may be one or more of styrene-butadiene rubber (SBR), water-based acrylic resin (water-based acrylic resin), poly(vinylidene difluoride) (PVDF), polytetrafluoroethylene (PTFE), ethylene-vinyl acetate (EVA), polyvinyl alcohol (PVA), and polyvinyl butyral (PVB).

In some embodiments, a thickness of the coating 11 is 5 µm-60 µm, for example, 7 µm-58 µm, 10 µm-55 µm, 12 µm-53 µm, 15 µm-50 µm, 17 µm-48 µm, 20 µm-45 µm, 22 µm-43 µm, 25 µm-40 µm, 27 µm-38 µm, 30 µm-35 µm, or 30 µm-32 µm. Therefore, in the later stage of cycling of the battery, when the dendrites growing parallel to the surface of the negative electrode plate 100 extend to the coating 11, the dendrites come into contact and react with the functional compound in the coating 11 to produce enough gas so as to burst the explosion-proof valve, thus avoiding the risk of the dendrites piercing the separator and causing a short circuit in the battery.

It should be noted that in this application, "a thickness of the coating 11" refers to the thickness of the coating 11 on one side of the negative electrode plate 100.

In some embodiments, a width of the coating 11 is not less than 3 mm, for example, 3 mm-10 mm, 4 mm-9 mm, 5 mm-8 mm, or 6 mm-7 mm. In some other embodiments, the width of the coating 11 is 3 mm-6 mm. Therefore, in the later stage of cycling of the battery, when the dendrites growing parallel to the surface of the negative electrode plate 100 extend to the coating 11, the dendrites come into contact and react with the functional compound in the coating 11 to produce enough gas so as to burst the explosion-proof valve, thus avoiding the risk of the dendrites piercing the separator and causing a short circuit in the battery.

In some embodiments, referring to FIG. 2, the coating 11 extends along a periphery of the negative electrode plate 100 to form a ring shape. Therefore, in the later stage of cycling of the battery, when the dendrites growing parallel to the surface of the negative electrode plate 100 extend to the ring-shaped coating 11 at the periphery of the negative electrode plate 100, the dendrites come into contact and react with the functional compound in the coating to produce enough gas so as to burst the explosion-proof valve, thus avoiding the risk of the dendrites piercing the separator and causing a short circuit in the battery.

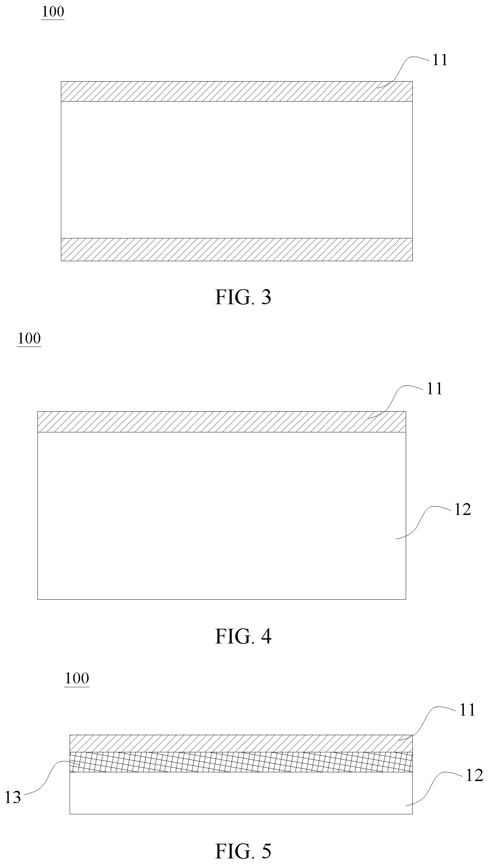

In some embodiments, referring to FIG. 3, the coating 11 is provided on two opposite sides in a width direction of the negative electrode plate 100. Therefore, with the provision of the coating 11 on the two opposite sides in the width direction of the negative electrode plate 100, since a distance from the coating 11 to two ends in the width direction of the negative electrode plate 100 is less than a distance from the coating 11 to two ends in a length direction of the negative electrode plate 100, in the later stage of cycling of the battery, the dendrites growing parallel to the surface of the negative electrode plate 100 preferentially extend to the coating 11 at the two ends in the width direction of the negative electrode plate 100, and the dendrites come into contact and react with the functional compound in the coating to produce enough gas so as to burst the explosion-proof valve, thus avoiding the risk of the dendrites piercing the separator and causing a short circuit in the battery.

In some embodiments, referring to FIG. 4, the negative electrode plate 100 includes a negative electrode current collector 12, and the coating 11 is provided at an edge of the negative electrode current collector 12. Therefore, in the later stage of cycling of the battery, when the dendrites growing parallel to the surface of the negative electrode plate 100 extend to the coating 11 of the negative electrode plate 100, the dendrites come into contact and react with the functional compound in the coating to produce enough gas so as to burst the explosion-proof valve, thus avoiding the risk of the dendrites piercing the separator and causing a short circuit in the battery.

It should be noted that in this application, "an edge of the negative electrode current collector 12" refers to a region of the negative electrode current collector 12 that is not covered by a positive electrode plate after the negative electrode plate 100, the separator, and the positive electrode plate are stacked to form an electrode assembly, that is, a region where a length and/or width direction of the negative electrode current collector 12 exceeds the positive electrode plate.

In some embodiments, referring to FIG. 5, the negative electrode plate 100 includes the negative electrode current collector 12 and a negative electrode active material layer 13, where the negative electrode active material layer 13 is provided on at least one side of the negative electrode current collector 12, and the coating 11 is provided at an edge of the negative electrode active material layer 13.

It should be noted that in this application, "an edge of the negative electrode active material layer 13" refers to a region of the negative electrode active material layer 13 of the negative electrode plate 100 that is not covered by a positive electrode plate after the negative electrode plate 100, the separator, and the positive electrode plate are stacked to form an electrode assembly, that is, a region where a length and/or width direction of the negative electrode active material layer 13 exceeds the positive electrode plate.

As an example, the negative electrode current collector 12 may be a conventional metal foil or a composite current collector (for example, a composite current collector may be formed by providing a metal material on a polymer matrix). As an example, the negative electrode current collector 12 may be a copper foil.

The negative electrode active material in the negative electrode active material layer 13 is not limited to any specific type, and may use active materials that are known in the art and can be used for negative electrodes of batteries, and persons skilled in the art can make selection according to actual needs. As an example, the negative electrode active material may include but is not limited to one or more of artificial graphite, natural graphite, hard carbon, soft carbon, a silicon-based material, and a tin-based material. The silicon-based material may include one or more of elemental silicon, a silicon-oxygen compound (such as silicon monoxide), a silicon-carbon composite, a silicon-nitrogen composite, and a silicon alloy. The tin-based material may include one or more of elemental tin, a tin-oxygen compound, and a tin alloy. These materials are all commercially available.

In some embodiments, the negative electrode active material may include a silicon-based material to further increase the energy density of the battery.

The negative electrode active material layer 13 typically further optionally includes a binder, a conductive agent, and another optional additive.

As an example, the conductive agent may include one or more of superconducting carbon, acetylene black, carbon black, Ketjen black, carbon dots, carbon nanotubes, graphene, and carbon nanofiber.

As an example, the binder may include one or more of styrene-butadiene rubber (SBR), water-based acrylic resin (water-based acrylic resin), poly(vinylidene difluoride) (PVDF), polytetrafluoroethylene (PTFE), ethylene-vinyl acetate (EVA), polyvinyl alcohol (PVA), and polyvinyl butyral (PVB).

As an example, the another optional additive may be a thickener, a dispersant (such as sodium carboxymethyl cellulose CMC-Na), or a PTC thermistor material.

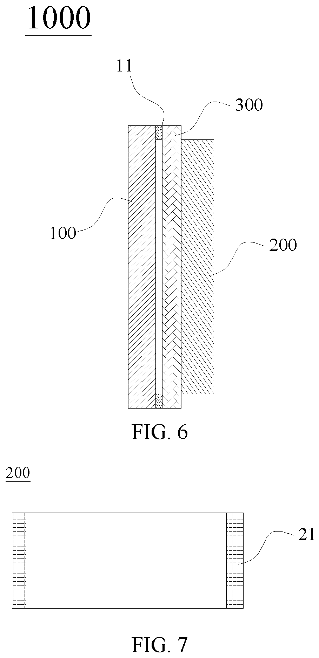

According to a second aspect, this application provides an electrode assembly. Referring to FIG. 6, the electrode assembly 1000 includes a positive electrode plate 200, a negative electrode plate 100, and a separator 300, where the separator 300 is provided between the positive electrode plate 200 and the negative electrode plate 100, and the negative electrode plate 100 includes the negative electrode plate according to the first aspect of this application. Therefore, during charge and discharge cycles, the electrode assembly has high safety performance.

In some embodiments, referring to FIG. 6, an orthographic projection of the coating 11 of the negative electrode plate 100 on the positive electrode plate 200 is located on an outer side of the positive electrode plat 200, that is, the coating 11 is located in the region of the negative electrode plate 100 that is not covered by the positive electrode plate. Therefore, in the later stage of cycling of the battery, since the trend of dendrites growing parallel to the surface of the negative electrode plate 100 is greater than the trend of dendrites growing along the tip, before the tips of the dendrites pierce the separator and cause a short circuit in the battery, when the dendrites that are formed on the surface of the negative electrode plate 100 and grow parallel to the surface of the negative electrode plate 100 extend to the coating 11 of the negative electrode plate 100, the dendrites come into contact and react with the functional compound in the coating 11 to produce gas to so as to open the explosion-proof valve, thus avoiding the risk of the dendrites piercing the separator and causing a short circuit in the battery.

In some embodiments, referring to FIG. 7, a ceramic coating 21 is provided at an end of the positive electrode plate 200 in a length direction. Therefore, the ceramic coating 21 is provided at the end of the positive electrode plate 200 in the length direction. On one hand, the ceramic coating 21 can achieve insulation, preventing burrs formed during a cutting process of the positive electrode plate 200 from piercing the separator to form a micro-short circuit. On the other hand, the ceramic coating 21 can prevent the dendrites generated on the negative electrode plate 100 from coming into contact with the positive electrode plate 200 across the edge of the negative electrode plate 100 and forming a micro-short circuit.

Further, a thickness of the ceramic coating 21 is 5 µm-60 µm, for example, 7 µm-58 µm, 10 µm-55 µm, 12 µm-53 µm, 15 µm-50 µm, 17 µm-48 µm, 20 µm-45 µm, 22 µm-43 µm, 25 µm-40 µm, 27 µm-38 µm, 30 µm-35 µm, or 30 µm-32 µm. Therefore, the ceramic layer 21 having such thickness can prevent the burrs formed during the cutting process of the positive electrode plate 200 from piercing the separator and forming a micro-short circuit, and can also prevent the dendrites generated on the negative electrode plate 100 from coming into contact with the positive electrode plate 200 across the edge of the negative electrode plate 100 and forming a micro-short circuit.

As an example, the ceramic layer 21 may include one or more of boehmite (γ-AlOOH), aluminum oxide (Al₂O₃), barium sulfate (BaSO₄), magnesium oxide (MgO), magnesium hydroxide (Mg(OH)₂), silicon dioxide (SiO₂), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), cerium oxide (CeO₂), zirconium titanate (SrTiO₃), barium titanate (BaTiO₃), and magnesium fluoride (MgF₂).

The positive electrode plate 200 typically includes a positive electrode current collector and a positive electrode active material layer provided on the positive electrode current collector, where the positive electrode active material layer includes a positive electrode active material.

The positive electrode current collector may be a conventional metal foil or a composite current collector (for example, a composite current collector may be formed by providing a metal material on a polymer matrix). As an example, the positive electrode current collector may be an aluminum foil.

The positive electrode active material is not limited to any specific type and may use active materials that are known in the art and can be used for positive electrodes of batteries, and persons skilled in the art can make selection according to actual needs.

For example, when the battery is a lithium-ion battery, as an example, the positive electrode active material may include but is not limited to one or more of a lithium transition metal oxide, an olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

For example, when the battery is a sodium-ion battery, as an example, the positive electrode active material may include but is not limited to at least one of a layered transition metal oxide, a polyanionic compound, and a Prussian blue analogue.

As examples of the layered transition metal oxide, the following may be listed:
Na₁₋ₓCuₕFeₖMnₗM¹ₘO_{2-y}, where M¹ is one or more of Li, Be, B, Mg, Al, K, Ca, Ti, Co, Ni, Zn, Ga, Sr, Y, Nb, Mo, In, Sn, and Ba, 0<x≤0.33, 0<h≤0.24, 0≤k≤0.32, 0<1≤0.68, 0≤m<0.1, h+k+1+m=1, and 0≤y<0.2;
Na_{0.67}Mn_{0.7}Ni_{z}M²_{0.3-z}O₂, where M² is one or more of Li, Mg, Al, Ca, Ti, Fe, Cu, Zn, and Ba; and
NaₐLi_{b}Ni_{c}Mn_{d}FeₑO₂, where 0.67<a≤1, 0<b<0.2, 0<c<0.3, 0.67<d+e<0.8, and b+c+d+e=1.

As examples of the polyanionic compound, the following may be listed:
A¹_{f}M³_{g}(PO₄)ᵢOⱼX¹₃₋ⱼ, where A is one or more of H, Li, Na, K, and NH₄, M³ is one or more of Ti, Cr, Mn, Fe, Co, Ni, V, Cu, and Zn, X¹ is one or more of F, Cl, and Br, 0<f≤4, 0<g≤2, 1≤i≤3, and 0<j≤2;
NaₙM⁴PO₄X², where M⁴ is one or more of Mn, Fe, Co, Ni, Cu, and Zn, X² is one or more of F, Cl, and Br, and 0<n≤2;
NaₚM⁵_{q}(SO₄)₃, where M⁵ is one or more of Mn, Fe, Co, Ni, Cu, and Zn, 0<p≤2, and 0<q≤2; and
NaₛMnₜFe₃₋ₜ(PO₄)₂(P₂O₇), where 0<s≤4, and 0≤t≤3, for example, t is 0, 1, 1.5, 2, or 3.

As examples of the Prussian blue analogue, the following may be listed:
AᵤM⁶ᵥ[M⁷(CN)₆]_{w}·xH₂O, where A is one or more of H⁺, NH⁴⁺, alkali metal cations, and alkaline earth metal cations, M⁶ and M⁷ are each independently one or more of transition metal cations, 0<u≤2, 0<v≤1, 0<w≤1, and 0<x<6. For example, A is one or more of H⁺, Li⁺, Na⁺, K⁺, NH₄⁺, Rb⁺, Cs⁺, Fr⁺, Be²⁺, Mg²⁺, Ca²⁺, Sr²⁺, Ba²⁺ and Ra²⁺, M⁶ and M⁷ are each independently cations of one or more of transition metal elements Ti, V, Cr, Mn, Fe, Co, Ni, Cu, Zn, Sn and W.

The modified compounds of the above materials may be obtained through doping modification and/or surface coating modification to the materials.

The positive electrode active material layer typically further optionally includes a binder, a conductive agent, and another optional additive.

As an example, the conductive agent may include one or more of superconducting carbon, acetylene black, carbon black, Ketjen black, carbon dots, carbon nanotubes, Super P (SP), graphene, and carbon nanofiber.

As an example, the binder may include one or more of styrene-butadiene rubber (SBR), water-based acrylic resin (water-based acrylic resin), poly(vinylidene difluoride) (PVDF), polytetrafluoroethylene (PTFE), ethylene-vinyl acetate (EVA), polyacrylic acid (PAA), carboxymethyl cellulose (CMC), polyvinyl alcohol (PVA), and polyvinyl butyral (PVB).

According to a third aspect, this application provides a battery including the electrode assembly according to the second aspect of this application. Therefore, the battery has high safety performance.

The battery may include an electrolyte, and the electrolyte conducts ions between the positive electrode and the negative electrode. The electrolyte may include an electrolytic salt and a solvent.

When the battery is a lithium-ion battery, as an example, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethane)sulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP).

When the battery is a sodium-ion battery, as an example, the electrolytic salt includes at least one of sodium hexafluorophosphate, sodium difluoro(oxalato)borate, sodium tetrafluoroborate, sodium bis(oxalato)borate, sodium perchlorate, sodium hexafluorarsenate, sodium bis(fluorosulfonyl)imide, sodium trifluoromethanesulfonate, and sodium bis(trifluoromethanesulfonyl)imide.

As an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

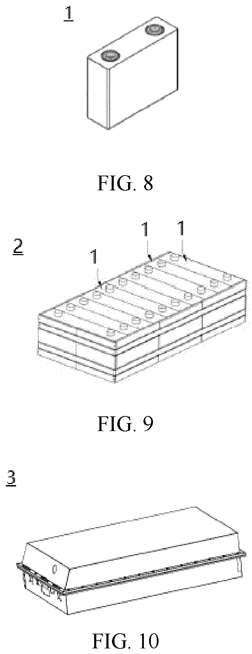

The battery is not limited to any particular shape in the embodiments of this application, and the battery may be cylindrical, rectangular, or of any other shapes. FIG. 8 shows a rectangular battery 1 as an example.

In some embodiments, the battery may include an outer package. The outer package is used for packaging a positive electrode plate, a negative electrode plate, and an electrolyte.

In some embodiments, the outer package may include a housing and a cover plate. The housing may include a base plate and side plates connected onto the base plate, and the base plate and the side plates enclose an accommodating cavity. The housing is provided with an opening communicating with the accommodating cavity, and the cover plate can cover the opening to close the accommodating cavity.

The positive electrode plate, the negative electrode plate, and the separator may form the electrode assembly through winding or stacking. The electrode assembly is packaged in the accommodating cavity. The electrolyte may be a liquid electrolyte, and the liquid electrolyte infiltrates into the electrode assembly. There may be one or more electrode assemblies in the battery, and the quantity may be adjusted as required.

In some embodiments, the outer package of the battery may be a hard shell, for example, a hard plastic shell, an aluminum shell, and a steel shell.

The outer package of the battery may alternatively be a soft pack, for example, a pouch cell. A material of the soft package may be plastic, for example, may include one or more of polypropylene (PP), polybutylene terephthalate (PBT), and polybutylene succinate (PBS).

In some embodiments, the battery may be assembled into a battery module, and the battery module may include a plurality of batteries. The specific quantity may be adjusted according to application and capacity of the battery module.

FIG. 9 shows a battery module 2 as an example. Referring to FIG. 9, in the battery module 2, a plurality of batteries 1 may be sequentially arranged in a length direction of the battery module 2. Certainly, the batteries may alternatively be arranged in any other manner. Further, the plurality of batteries 1 may be fastened through fasteners.

The battery module 2 may alternatively include an enclosure having an accommodating space, and the plurality of secondary batteries 1 are accommodated in the accommodating space. In some embodiments, the battery module may be further assembled into a battery pack, and a quantity of battery modules included in the battery pack may be adjusted according to application and capacity of the battery pack.

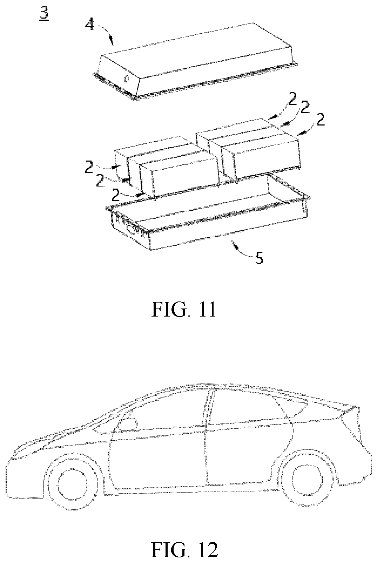

FIG. 10 and FIG. 11 show a battery pack 3 as an example. Referring to FIG. 10 and FIG. 11, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery modules 2. The plurality of battery modules 2 may be arranged in the battery box in any manner.

### [Electric apparatus]

This application further provides an electric apparatus. The electric apparatus includes the battery, and the battery is configured to supply electrical energy. Specifically, the battery may be used as a power source of the electric apparatus, and may also be used as an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, and an electric truck), an electric train, a ship, a satellite, and an energy storage system.

FIG. 12 shows an electric apparatus as an example. The electric apparatus is a battery electric vehicle, a hybrid electric vehicle, or a plug-in hybrid electric vehicle.

In another example, the electric apparatus may be a mobile phone, a tablet computer, or a notebook computer. Such electric apparatus is generally required to be light and thin and may use a battery as its power source.

To describe the technical problems solved by the embodiments of this application, technical solutions, and beneficial effects more clearly, the following further describes this application in detail with reference to the embodiments and accompanying drawings. Apparently, the described embodiments are only some but not all of the embodiments of this application. The following description of at least one exemplary embodiment is merely illustrative and definitely is not construed as any limitation on this application or on use of this application. All other embodiments obtained by persons of ordinary skill in the art on the basis of the embodiments of this application without creative efforts shall fall within the protection scope of this application.

### I. Examples

### Example 1

### 1. Preparation of positive electrode plate

A polyvinylidene fluoride binder was fully dissolved in N-methylpyrrolidone, then a carbon black conductive agent and a positive electrode active material Na₄Fe₃(PO₄)₂P₂O₇ were added to prepare a uniformly dispersed positive electrode slurry (a mass ratio of polyvinylidene fluoride, the carbon black conductive agent, and the positive electrode active material Na₄Fe₃(PO₄)₂P₂O₇ was 10:10:80), the positive electrode slurry was uniformly applied on two surfaces of an aluminum foil, then the aluminum foil was transferred to a vacuum drying oven and fully dried there, an electrode plate obtained was rolled, and ultimately, punching was performed to obtain a positive electrode plate.

### 2. Preparation of negative electrode plate

A negative electrode active material artificial graphite, a conductive agent carbon black (Super P), a binder styrene-butadiene rubber (SBR), and sodium carboxymethyl cellulose (CMC-Na) were mixed well in an appropriate amount of solvent deionized water at a mass ratio of 96.4:0.7:1.8:1.1 to obtain a negative electrode slurry. Then, the negative electrode slurry was applied on two surfaces of a negative electrode current collector copper foil. After drying, a negative electrode active material layer was formed on the negative electrode current collector. Then, a slurry including a functional compound n-butanol and the binder styrene-butadiene rubber (at a mass ratio of 80:20) was applied on two opposite edges in a width direction of the negative electrode active material layer on both sides. After drying, a coating having a width of 5 mm and a thickness of 20 µm was formed at the edge of the negative electrode active material layer, that is, a negative electrode plate was obtained.

### 3. Separator

A polyethylene film was used as the separator.

### 4. Preparation of electrolyte

Ethylene carbonate (EC) and ethyl methyl carbonate (EMC) were mixed at a mass ratio of 30:70 to obtain an organic solvent. A fully dried electrolytic salt NaPF₆ was dissolved in the above mixture solvent, with a concentration of the electrolytic salt being 1.0 mol/L. Then, the resulting mixture was mixed well to obtain an electrolyte.

### 5. Preparation of battery

The positive electrode plate, the separator, and the negative electrode plate were sequentially stacked (an orthographic projection of the coating of the negative electrode plate on the positive electrode plate was located on an outer side of the positive electrode plate, and a size of the separator was equal to that of the negative electrode plate), so that the separator was located between the positive electrode plate and the negative electrode plate for separation. The resulting stack was wound to obtain an electrode assembly. The electrode assembly was placed in an outer package, then the prepared electrolyte was injected into a dried sodium-ion battery, followed by processes including vacuum sealing, standing, formation, and shaping, to obtain a sodium-ion battery.

Preparation methods of sodium-ion batteries in Examples 2 to 20 were the same as that in Example 1, with differences as shown in Table 1.

**Table 1**

| | Coating | | | |
|---|---|---|---|---|
| | Functional compound composition | Percentage of functional compound in coating (wt%) | Width (mm) | Thickness (µm) |
| Example 1 | N-butanol | 80 | 5 | 20 |
| Example 2 | Butyric acid | 80 | 5 | 20 |
| Example 3 | Pentylamine | 80 | 5 | 20 |
| Example 4 | 1-pentanethiol | 80 | 5 | 20 |
| Example 5 | Phenol | 80 | 5 | 20 |
| Example 6 | Benzophenone | 80 | 5 | 20 |
| Example 7 | Cyclopentadiene | 80 | 5 | 20 |
| Example 8 | Pentylamine | 70 | 5 | 20 |
| Example 9 | Pentylamine | 75 | 5 | 20 |
| Example 10 | Pentylamine | 85 | 5 | 20 |
| Example 11 | Pentylamine | 90 | 5 | 20 |
| Example 12 | Pentylamine | 80 | 3 | 20 |
| Example 13 | Pentylamine | 80 | 4 | 20 |
| Example 14 | Pentylamine | 80 | 6 | 20 |
| Example 15 | Pentylamine | 80 | 5 | 5 |
| Example 16 | Pentylamine | 80 | 5 | 10 |
| Example 17 | Pentylamine | 80 | 5 | 30 |
| Example 18 | Pentylamine | 80 | 5 | 40 |
| Example 19 | Pentylamine | 80 | 5 | 50 |
| Example 20 | Pentylamine | 80 | 5 | 60 |

Preparation methods of sodium-ion batteries in Examples 21 to 40 were the same as that in Example 1, except that no negative electrode active material layer was applied on the negative electrode current collector, that is, coatings were respectively formed at the edges of two opposite ends in the width direction on both sides of the negative electrode current collector. Parameters of the coatings are shown in Table 2.

**Table 2**

| | Coating | | | |
|---|---|---|---|---|
| | Functional compound composition | Percentage of functional compound in coating (wt%) | Width (mm) | Thickness (µm) |
| Example 21 | N-butanol | 80 | 5 | 20 |
| Example 22 | Butyric acid | 80 | 5 | 20 |
| Example 23 | Pentylamine | 80 | 5 | 20 |
| Example 24 | 1-pentanethiol | 80 | 5 | 20 |
| Example 25 | Phenol | 80 | 5 | 20 |
| Example 26 | Benzophenone | 80 | 5 | 20 |
| Example 27 | Cyclopentadiene | 80 | 5 | 20 |
| Example 28 | Pentylamine | 70 | 5 | 20 |
| Example 29 | Pentylamine | 75 | 5 | 20 |
| Example 30 | Pentylamine | 85 | 5 | 20 |
| Example 31 | Pentylamine | 90 | 5 | 20 |
| Example 32 | Pentylamine | 80 | 3 | 20 |
| Example 33 | Pentylamine | 80 | 4 | 20 |
| Example 34 | Pentylamine | 80 | 6 | 20 |
| Example 35 | Pentylamine | 80 | 5 | 5 |
| Example 36 | Pentylamine | 80 | 5 | 10 |
| Example 37 | Pentylamine | 80 | 5 | 30 |
| Example 38 | Pentylamine | 80 | 5 | 40 |
| Example 39 | Pentylamine | 80 | 5 | 50 |
| Example 40 | Pentylamine | 80 | 5 | 60 |

The preparation method of the sodium-ion battery in Comparative Example 1 was the same as that in Example 1, except that no coating was provided at the edge of the negative electrode active material layer, and the size of the positive electrode plate was equal to that of the negative electrode plate.

The preparation method of the sodium-ion battery in Comparative Example 2 was the same as that in Example 21, except that no coating was provided at the edge of the negative electrode current collector, and the size of the positive electrode plate was equal to that of the negative electrode plate.

### II. Battery performance test

The battery in each of Examples 1 to 40 and Comparative Examples 1 and 2 was charged to a voltage of 3.65 V at 25°C at a constant voltage of 1C, then charged to a current of 0.05C at a constant current of 3.65 V, and then discharged to a voltage of 2.5 V at a constant current of 1C. This was a charge and discharge cycle. This charge and discharge cycle was repeated, a battery gas production velocity (an average gas production velocity after 500 cycles) was detected after 500 cycles of the battery, and the fire condition of the battery when an internal pressure of the battery reached 0.65 Mpa (a critical value at which the explosion-proof valve was burst was 0.65 Mpa). The relevant test results are shown in Table 3.

A method for testing the battery gas production velocity included the following steps:
(1) The assembled battery was baked and then injected with the electrolyte, then an electrolyte injection hole of the battery was sealed, and after activation at room temperature, metal composite strips were welded to the positive and negative electrodes of the battery after activated at room temperature to obtain an activated battery under test.
(2) The electrolyte injection hole of the battery was sealed using an OPP beige adhesive tape. The strip welded to the positive electrode of the battery was an aluminum strip, and the strip welded to the negative electrode of the battery was a nickel strip. The aluminum strip was welded using an ultrasonic welding machine, and the nickel strip was welded using an internal resistance spot welding machine.
(3) The activated battery was fixed onto a fixture, the metal composite strips of the battery were connected to the positive and negative electrodes of a charging and discharging device through wires, where the wires were 2.5 mm² copper wires, a crocodile clip was welded to one end of the wire connected to the metal strip, the charging and discharging device was a sodium battery formation test cabinet, and the charging and discharging device was placed in a drying workshop having a dew point lower than or equal to 5°C, a humidity less than or equal to 20 RH%, and a temperature less than or equal to 28°C.
(4) The power was turned on for precharging the activated battery, and a digital pressure gauge value at each time point required before and during charging.
(5) An internal pressure of the battery at each time point (that was, an internal pressure of the battery) was calculated according to the digital pressure gauge value recorded before and after charging, so that the gas production amount of the battery was analyzed, and the average gas production velocity after 500 cycles was calculated.

**Table 3**

| | Average gas production velocity after 500 cycles (ml/min) | Fire condition of battery when internal pressure of battery reached 0.65 Mpa |
|---|---|---|
| Example 1 | 0.6 | No fire |
| Example 2 | 0.55 | No fire |
| Example 3 | 0.58 | No fire |
| Example 4 | 0.64 | No fire |
| Example 5 | 0.63 | No fire |
| Example 6 | 0.7 | No fire |
| Example 7 | 0.66 | No fire |
| Example 8 | 0.5 | No fire |
| Example 9 | 0.55 | No fire |
| Example 10 | 0.6 | No fire |
| Example 11 | 0.65 | No fire |
| Example 12 | 0.45 | No fire |
| Example 13 | 0.55 | No fire |
| Example 14 | 0.6 | No fire |
| Example 15 | 0.55 | No fire |
| Example 16 | 0.57 | No fire |
| Example 17 | 0.7 | No fire |
| Example 18 | 0.75 | No fire |
| Example 19 | 0.8 | No fire |
| Example 20 | 0.85 | No fire |
| Example 21 | 0.6 | No fire |
| Example 22 | 0.55 | No fire |
| Example 23 | 0.58 | No fire |
| Example 24 | 0.64 | No fire |
| Example 25 | 0.63 | No fire |
| Example 26 | 0.7 | No fire |
| Example 27 | 0.66 | No fire |
| Example 28 | 0.5 | No fire |
| Example 29 | 0.55 | No fire |
| Example 30 | 0.6 | No fire |
| Example 31 | 0.65 | No fire |
| Example 32 | 0.45 | No fire |
| Example 33 | 0.55 | No fire |
| Example 34 | 0.6 | No fire |
| Example 35 | 0.55 | No fire |
| Example 36 | 0.57 | No fire |
| Example 37 | 0.7 | No fire |
| Example 38 | 0.75 | No fire |
| Example 39 | 0.8 | No fire |
| Example 40 | 0.85 | No fire |
| Comparative example 1 | 0.00005 | Battery caught fire when internal pressure of battery reached 0.5 Mpa |
| Comparative example 2 | 0.00005 | Battery caught fire when internal pressure of battery reached 0.55 Mpa |

It can be seen from the data of Table 3 that after 500 cycles, the gas production velocities of the sodium-ion batteries in Examples 1 to 40 are significantly higher than those of Comparative Examples 1 and 2, indicating that after 500 cycles of the battery, the dendrites generated on the negative electrode plate react with the functional compound in the coating at the edge of the negative electrode plate to produce gas. Moreover, the sodium-ion batteries in Examples 1 to 40 do not catch fire when the internal pressure reaches 0.65 Mpa, indicating that the explosion-proof valve has been opened before occurrence of a short circuit in the battery; however, the batteries in Comparative Examples 1 and 2 catch fire when the internal pressure does not reach 0.65 Mpa, thus indicating that since the negative electrode plate of this application is used, in the later stage of cycling of the battery, when the dendrites growing parallel to the surface of the negative electrode plate extend to the coating, the dendrites come into contact and react with the functional compound in the coating to produce gas so as to burst the explosion-proof valve, thus avoiding the risk of the dendrites piercing the separator and causing a short circuit in the battery.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A negative electrode plate, wherein a coating is provided at an edge of the negative electrode plate, and the coating comprises a functional compound, the functional compound being able to react with sodium metal or lithium metal to produce gas.

2. The negative electrode plate according to claim 1, wherein the functional compound comprises at least one of an alcohol compound, a carboxylic acid compound, a phenol compound, an amine compound, a thiol compound, a benzophenone compound, and a cycloolefin compound.

3. The negative electrode plate according to claim 1 or 2, wherein the number of carbon atoms on a main chain of the functional compound is not less than 4, preferably 4-12.

4. The negative electrode plate according to any one of claims 1 to 3, wherein a mass percentage of the functional compound in the coating is 70%-90%.

5. The negative electrode plate according to any one of claims 1 to 4, wherein a thickness of the coating is 5 µm-60 µm.

6. The negative electrode plate according to any one of claims 1 to 5, wherein a width of the coating is not less than 3 mm, preferably 3 mm-6 mm.

7. The negative electrode plate according to any one of claims 1 to 6, wherein the coating extends along a periphery of the negative electrode plate to form a ring shape.

8. The negative electrode plate according to any one of claims 1 to 7, wherein the coating is provided on two opposite sides in a width direction of the negative electrode plate.

9. The negative electrode plate according to any one of claims 1 to 8, wherein the negative electrode plate comprises a negative electrode current collector, and the coating is provided at an edge of the negative electrode current collector.

10. The negative electrode plate according to any one of claims 1 to 9, wherein the negative electrode plate comprises the negative electrode current collector and a negative electrode active material layer, the negative electrode active material layer is provided on at least one side of the negative electrode current collector, and the coating is provided at an edge of the negative electrode active material layer.

11. An electrode assembly, comprising a positive electrode plate, a negative electrode plate, and a separator, wherein the separator is provided between the positive electrode plate and the negative electrode plate, and the negative electrode plate comprises the negative electrode plate according to any one of claims 1 to 10.

12. The electrode assembly according to claim 11, wherein an orthographic projection of the coating of the negative electrode plate on the positive electrode plate is located on an outer side of the positive electrode plate.

13. The electrode assembly according to claim 11 or 12, wherein a ceramic coating is provided at an end of the positive electrode plate in a length direction.

14. A battery, comprising the electrode assembly according to any one of claims 11 to 13.

15. An electric apparatus, comprising the battery according to claim 14, wherein the battery is configured to supply electrical energy.
